# EUROPÄISCHE PATENTSCHRIFT

(11) **EP 0 316 676 B1**
(45) Veröffentlichungstag und Bekanntmachung des Hinweises auf die Patenterteilung: **14.08.1996**
(21) Anmeldenummer: 88118356.0
(22) Anmeldetag: 04.11.1988
(51) Int. Cl.: C09J 7/02

(54) **In wässrigem Alkali auflösbare Klebefolie, wie Etikett und dgl**
Adhesive sheet, such as a label or the like, soluble in aqueous alkali
Feuille adhésive, comme par exemple étiquette détachable en milieu alcalin aqueux

(30) Priorität: 14.11.1987 DE 3738786
(43) Veröffentlichungstag der Anmeldung: 24.05.1989
(73) Patentinhaber: BELLAND AG, CH-4500 Solothurn (CH)
(72) Erfinder: Deibig, Heinrich, Dr., CH-4524 Guensberg (CH); Dinkelaker, Albrecht, CH-4562 Biberist (CH); Rossmann, Klaus, CH-4704 Wolfisberg (CH)
(74) Vertreter: Patentanwälte Ruff, Beier, Schöndorf und Mütschele

(56) Entgegenhaltungen:
- DE-A- 3 435 468
- FR-A- 2 158 266
- US-A- 3 763 117

## Beschreibung

Die vorliegende Erfindung betrifft eine in wäßrigem Alkali auflösbare Selbstklebefolie, insbesondere ein Etikett und dergleichen.

Bei der großtechnischen Reinigung von Gebinden aller Art, wie Kästen oder Harassen und insbesondere Ein- und Mehrwegflaschen aus Glas oder Kunststoffen treten Probleme auf. Dies ist vor allem beim Entfernen der Etiketten von Flaschen, namentlich in der Getränkeindustrie, der Fall. So lösen sich die Etiketten meist nur schlecht in der Spülflotte ab, und es entstehen zusammen mit den Resten der Klebstoffe Schäume, welche die schnell laufenden Reinigungsanlagen ganz erheblich behindern. Aus der US-A-3 763 117 ist es bekannt, herkömmliches Etikettmaterial mit einem alkalilöslichen Haftkleber zu versehen. Durch Einweichen in heißen alkalischen Lösungen kann das Etikett von beklebten Flächen wieder abgelöst werden. Die abgelösten flächigen Strukturen der Etiketten führen weiterhin zu Verstopfungen von Sieben, Abläufen und Pumpen. Häufig ist es auch wünschenswert Beschriftungen und dgl. von anderen Gegenständen wie Schaufenstern, Plakatflächen, Autoscheiben und dgl. problemlos entfernen zu können. Es werden deshalb Foliensysteme und Etikettsysteme verlangt, die sich leicht wieder entfernen lassen sollen. Auch eine gute Entsorgung der Rückstände, insbesondere von Spülwässern, ist erwünscht.

Es wurde eine Selbstklebefolie gefunden, welche diese Nachteile vermeidet und die gewünschten Eigenschaften besitzt.

Gegenstand der Erfindung ist eine Selbstklebefolie aus mindestens zwei Schichten, wie Etikett und dgl., wobei
a) eine Schicht aus einer in wäßrigem Alkali löslichen Folie eines Copolymerisats aus Acrylsäure und/oder Methacrylsäure sowie Acrylat und/oder Methacrylat und
b) die zweite Schicht aus einem in wäßrigem Alkali löslichen Haftkleber besteht und die gesamte Selbstklebefolie in wäßrigem Alkali auflösbar ist und mindestens das Copolymerisat aus der Lösung durch Ansäuern ausfällbar und abtrennbar ist.

Die erfindungsgemäße Klebefolie ist nicht nur ablösbar, sondern vollständig auflösbar. Dies ist besonders vorteilhaft bei der Ausbildung der erfindungsgemäßen Klebefolie als Etikett bzw. Etikettensystem. Im Gegensatz zu den bisherigen auf Polyvinylalkohol-Basis beruhenden, wasserlöslichen Etiketten sind die erfindungsgemäßen Etiketten in den Spülflotten der schnell laufenden Flaschenreinigungsanlagen vollständig löslich, da diese Spülflotten alkalisch eingestellt sind. Demgegenüber sind Etiketten auf Polyvinylalkohol-Basis in alkalischem Milieu schlecht löslich. Es treten auch keine Schwierigkeiten mit abgefallenen Etiketten auf und es entsteht kein Faserbrei. Vielmehr kann die die Klebefolie gelöst enthaltende Spülflotte mühelos verpumpt werden. Dadurch werden auch Verstopfungen von Filtern, Sieben und Pumpen vermieden. Andererseits ist die erfindungsgemäße Klebefolie wasserfest auch im aufgeklebten Zustand. So ist neutrales oder saures Wasser, z.B. Regenwasser, nicht schädlich. Ein wesentlicher Vorteil der erfindungsgemäßen Folie besteht darin, daß das in wäßrigem Alkali aufgelöste Copolymerisat in einem getrennten Vorgang durch eine einfache Ansäuerung wieder ausgefällt und abgetrennt werden kann. Damit wird nicht nur das Wasser vom Polymerisat befreit. Vielmehr kann das Polymerisat für viele Fälle wieder verwendet werden. Auch das Waschwasser kann für Auflösungszwecke rückgeführt und wieder verwendet werden, nachdem sein pH-Wert wieder in den alkalischen Bereich verschoben wird. Auf diese Art und Weise können große Mengen an Abwasser eingespart werden.

Die Folie der Klebefolie ist vorzugsweise derart, wie sie in der deutschen Offenlegungschrift 34 35 468 beschrieben ist. Sie kann durch eine Breitschlitzdüse geformt oder als Blasfolie hergestellt werden. Das Copolymerisat kann mit Vorteil in einem Extruder durch radikalische Polymerisation der entsprechenden Monomere hergestellt werden. Mit besonderem Vorteil ist der Kleber ebenfalls ein Copolymerisat aus Acrylsäure und/oder Methacrylsäure sowie mindestens einem Acrylat und/oder Methacrylat. Acrylat ist bevorzugt, wobei Acrylate mit Alkoholresten mit 2 bis 18 Kohlenstoffatomen, insbesondere 3 bis 6 Kohlenstoffatomen gute Klebeeigenschaften bringen. Butylacrylat ist bevorzugt. Vorteilhaft ist ein Molverhältnis 3 bis 4 mol Acrylat pro mol der Monocarbonsäure.

Die Folie der Klebefolie ist mit dem Kleber bereits beschichtet und ggf. durch eine Abdeckfolie und dgl. geschützt. Die Folie kann durchsichtig und ggf. eingefärbt sein. Wird sie als Etikettensystem verwendet, dann ist die Folie vorzugsweise undurchsichtig, was durch Einarbeiten von Pigmenten in das Copolymerisat erreichbar ist.

Bei einer bevorzugten Ausführungsform der erfindungsgemäßen Klebefolie ist diese mindestens stellenweise mit mindestens einer Farbschicht bedeckt, insbesondere bedruckt. Die Druckfarbe ist vorzugsweise wiederum in wäßrigem Alkali löslich und vorzugsweise in neutralem bis saurem Milieu unlöslich. Hierzu kann die Farbe als Bindemittel ein Copolymerisat aus Acrylsäure und/oder Methacrylsäure sowie mindestens einem Acrylat und/oder Methacrylat enthalten. Das Copolymerisat kann wiederum in ähnlicher Weise aufgebaut sein wie das des Klebers und der Folie. Hierbei ist ein Copolymerisat aus Ethylacrylat und Acrylsäure bevorzugt, wobei ein Molverhältnis im Bereich von 4 : 1 besonders günstig ist.

Demgegenüber besteht die Folie mit Vorteil im wesentlichen aus einem Copolymerisat aus Ethylacrylat und Methacrylsäure mit einem Molverhälnis im Bereich von 2 : 1 bis 4 : 1, insbesondere 2,5 : 1 bis 3 : 1. Das Molekulargewicht der Copolymerisate kann bei Folie, Kleber und Bindemittel der Farbe im Bereich von 50 000 bis 100 000 insbesondere 60 000 bis 80 000 liegen.

Die Druckfarben können organische Lösungsmittel enthalten, in denen die Copolymerisate mindestens teilweise gelöst sind. Bevorzugt sind jedoch wäßrige Dispersionsfarben, die vorzugsweise frei von organischen Lösungsmitteln sind. Als Farbstoffe eignen sich in der Druckerei übliche Farben und Pigmente, vor allem Schwarztöne wie Ruß, Weißtöne wie Titandioxid oder Bariumsulfat und die handelsüblichen bunten Farbtöne.

Die Dicke der Klebefolie kann dem jeweiligen Verwendungszweck angepasst werden und liegt in der Regel zwischen 10 und 500 µm, je nach gewünschter Festigkeit. Für Etiketten sind beispielsweise Folienstärken von 20 bis 70 µm ausreichend. Als wäßrige Alkalien für das Auflösen der Folien sind Lösungen von Alkalicarbonaten, Alkalihydrogencarbonaten, Alkalimetasilicaten Alkalihydroxiden sowie Ammoniaklösung und dgl. geeignet. Beispielsweise löst sich die Klebefolie, etwa in Form eines bedruckten Etiketts, in 1 bis 4%iger Soda- oder Ammoniaklösung innerhalb kurzer Zeit restlos auf.

Weitere Merkmale der Erfindung ergeben sich aus der nachfolgenden Beschreibung von bevorzugten Ausführungsformen in Verbindung mit den Unteransprüchen.

### Beispiel

5 kg eines Granulats, das TiO₂ als weißes Pigment enthält, werden auf einer Extrusionsanlage mit einer Breitschlitzdüse zu einer Flachfolie mit einer Folienstärke von ca. 50 µm extrudiert. Das Granulat wurde zuvor wie in der DE-OS 34 35 468 beschrieben, durch radikalische Polymerisation aus Ethylacrylat und Methacrylsäure mit einem Molverhältnis von 2,6 : 1 im Extruder truder polymerisiert. Diese Folie wurde anschließend einseitig mit einem Haftkleber beschichtet, der aus einem Copolymerisat von 3,0 mol n-Butylacrylat pro mol Acrylsäure besteht und analog der o. g. DE-OS 34 35 468 hergestellt wurde. Der Kleber hat Dauerklebeeigenschaften und ist lösungsmittelfrei. Die Kleberschicht wurde mit einem handelsüblichen Siliconpapier abgedeckt, das leicht abziehbar ist.

Die so erhaltene Klebefolie wurde mit einer Schablone bedeckt, wonach mit einer Tiefdruckrolle eine Druckfarbe auf die freien Flächen aufgebracht wurde. Die Druckfarbe bestand aus einer 25%igen wäßrigen gefärbten Dispersion eines Bindemittels, das seiner Zusammensetzung nach ein Copolymerisat aus 4 mol Ethylacrylat und 1 mol Methacrylsäure ist. Die Herstellung erfolgte wiederum nach der in der deutschen Offenlegungsschrift 34 35 468 beschriebenen Weise. Als Farbstoff wurden 65 g blaues Pigment (LUCONYL BLAU 7 BASF-6900) in die Dispersion eingearbeitet. Die Viskosität der Druckfarbe wurde mit einem Verdickungsmittel auf 22 Sekunden (DIN-Becher4) eingestellt. Anstelle des vorgenannten Pigments können mit gleichem Ergebnis auch andere Pigmente oder Pigmentmischungen verwendet werden. Die Farbe kann auch nach anderen herkömmlichen Verfahren aufgetragen werden. Nach dem Trocknen der Farbe wurden aus der Folie Proben von 10 x 10 cm mit Hilfe eines Stanzwerkzeuges ausgestanzt. Das Stanzen und Entgittern verlief problemlos.

Muster der so hergestellten Klebeetiketten wurden auf Flaschen (Glas oder Kunststoff) oder Getränkeharassen (Flaschenkästen) aufgeklebt. Dann wurden die Flaschen und Harassen gelagert, wobei sie den üblichen Gebrauchsbedingungen ausgesetzt wurden (wie Regen, Sonnenbestrahlung und dgl.), um die Haltbarkeit der Etiketten zu überprüfen. Die Etiketten waren flexibel und zeigten auch nach langer Lagerung eine gute Haftung und gutes Aussehen. Danach wurden die Flaschen bzw. Harassen mit einer schwach alkalischen Reinigungslösung, z. B. einer 2%igen wäßrigen Sodalösung behandelt. Die Lösung wurde bei Raumtemperatur mit einer Brause auf das zu spülende Gut aufgesprüht. Die Etiketten, Druckfarben und Kleber lösten sich dabei innerhalb weniger Minuten vollständig auf.

Der aufgelöste Copolymeranteil wurde aus der niedrig-viskosen Spülflotte durch Ansäuern mit Salzsäure ausgefällt. Dabei fiel das Copolymere in Form von kleinen Brocken bzw. Klumpen an, die durch einfache mechanische Trennoperation vom wäßrigen System abgetrennt wurden.

Nach Erhöhen des pH-Wertes durch Zugabe von Natronlauge auf 9 bis 10 und Zugabe von Tensiden konnte das wäßrige System erneut zum Spülen verwendet werden. Nachdem der Salzgehalt durch mehrfaches Wiederholen dieses Zyklus angestiegen war, wurde jeweils ein Teil der salzhaltigen Spülflotte ausgeschleust und durch Zuführung von Frischwasser ersetzt. Auf diese Weise konnte die Menge an Abwasser stark reduziert werden.

Da die Copolymerisate von Folie, Kleber und Farbe einander recht ähnlich sind, kann das abgetrennte Copolymerisat wieder verwendet werden, insbesondere frisch hergestelltem Copolymerisat zugemischt werden. Aufgrund seiner molekularen Zusammensetzung kann das Copolymerisat, wenn eine anderweitige Wiederverwendung nicht gewünscht ist, problemlos verbrannt werden.

Der im Beispiel verwendete Haftkleber wurde in folgender Weise hergestellt:

Ein Gemisch aus 30 mol n-Butylacrylat, 10 mol Acrylsäure, 5 mmol/mol an Peroxid (LUPEROX 26 R der Firma PENWALT, Grünzburg, BRD) und - additiv bezogen auf das beschriebene Gemisch - 20 % n-Propanol- wurde kontinuierlich bei 115°C gemäß der DE-OS 33 35 468 auf einem Reaktionsextruder, z. B. jenem gemäß der DE-OS 33 35 954 polymerisiert.

Ebenfalls einen guten Haftkleber erhält man, wenn man ein Gemisch aus 35 mol n-Butylacrylat, 10 mol Acrylsäure, 10 mmol/mol Monomergemisch an n-Dodecylmercaptan, 5 mmol/mol Monmergemisch an Peroxyd (LUPEROX 26 R der Firma Pennwalt, Günsburg, BRD) und - additiv bezogen auf das beschriebene Gemisch - 20 n-Propanol α - V° wurde kontinuierlich bei 115 α - V° Cel gemäß der DE-OS 34 35 468 auf einem Reaktionsextruder, z. B. jenem gemäß DE-OS 33 35 954 polymerisiert.

Das Reaktionsgemisch wurde in einem nachgeschalteten Aufarbeitungsextruder (Compounder) von n-Propanol und von nicht polymerisiertem Monomeren befreit und in Blechgefäßen gesammelt.

Das erhaltene Copolymerisat ist ein hochviskoser Haftklebstoff mit einer inhärenten Viskosität von 0,2 dl/g, gemessen an einer 0,5%igen Lösung in Dioxan. Die Säurezahl des Copolymerisats ist 96 mg KOH/g. Das Copolymerisat löst sich außer in wässrigen Basen, wie z. B. l%iger Ammoniaklösung oder 3%iger Sodalösung auch in organischen Lösungsmitteln, wie z. B. Ethanol, n-Propanol, Aceton, Toluol, Ethylacetat.

## Patentansprüche

1. Selbstklebefolie aus mindestens zwei Schichten, wie Etikett u.dgl., wobei
a) eine Schicht aus einer in wäßrigem Alkali löslichen Folie eines Copolymerisats aus Acrylsäure und/oder Methacrylsäure sowie Acrylat und/oder Methacrylat und
b) die zweite Schicht aus einem im wäßrigen Alkali löslichen Haftkleber besteht und die gesamte Selbstklebefolie in wäßrigem Alkali auflösbar ist und mindestens das Copolymerisat aus der Lösung durch Ansäuern ausfällbar und abtrennbar ist.

2. Klebefolie nach Anspruch 1, dadurch gekennzeichnet, daß der Kleber ein Copolymerisat aus Acrylsäure und/oder Methacrylsäure sowie Acrylat und/oder Methacrylat ist.

3. Klebefolie nach Anspruch 1 oder 2, dadurch gekennzeichnet, daß der Kleber ein Copolymerisat aus 2,5 bis 5 mol, vorzugsweise 3 bis 4 mol von mindestens einem Acrylat, dessen Alkoholrest 2 bis 18 C-Atome enthält, pro mol (Meth)Acrylsäure, 0 bis 1,0 mol eines Termonomeren, das vom Acrylat verschieden ist, sowie üblichen Polymerisationszusätzen darstellt.

4. Klebefolie nach Anspruch 3, dadurch gekennzeichnet, daß der Kleber ein Copolymerisat aus 3 bis 4 mol n-Butylacrylat pro mol Acrylsäure darstellt.

5. Klebefolie nach einem der vorhergehenden Ansprüche, dadurch gekennzeichnet, daß die Folie undurchsichtig ist, insbesondere Pigmente enthält.

6. Klebefolie nach einem der vorhergehenden Ansprüche dadurch gekennzeichnet, daß die Folie bedruckt ist, insbesondere mit mindestens einer in wäßrigem Alkali löslichen Druckfarbe versehen ist.

7. Klebefolie nach Anspruch 5 oder 6, dadurch gekennzeichnet, daß die Druckfarbe als Bindemittel ein Copolymerisat aus Acrylsäure und/oder Methacrylsäure sowie Acrylat und/oder Methacrylat enthält.

8. Klebefolie nach Anspruch 6 oder 7, dadurch gekennzeichnet, daß die Druckfarbe ein Copolymerisat aus Ethylacrylat und Methacrylsäure enthält, dessen Molverhältnis vorzugsweise bei ca. 4 : 1 liegt.

9. Klebefolie nach einem der vorhergehenden Ansprüche, dadurch gekennzeichnet, daß die Folie im wesentlichen aus einem Copolymerisats aus Ethylacrylat und Methacrylsäure mit einem Molverhältnis 2 : 1 bis 4: 1, insbesondere 2,5 : 1 bis 3: 1 besteht.

10. Klebefolie nach einem der vorhergehenden Ansprüche, dadurch gekennzeichnet, daß die Copolymere nach Auflösen der Klebefolie in wäßriger alkalischer Lösung durch eine saure Fällungsreaktion aus der Lösung zurückgewinnbar sind.

## Claims

1. Self-adhesive sheet of at least two layers, such as a label or the like, in which
a) one layer comprises a film of a copolymer of acrylic and/or methacrylic acid, as well as acrylate and/or methacrylate soluble in aqueous alkali and
b) the second layer comprises a contact adhesive soluble in aqueous alkali and the entire self-adhesive sheet can be dissolved in aqueous alkali and at least the copolymer can be precipitated and separated from the solution by acidification.

2. Adhesive sheet according to claim 1, characterized in that the adhesive is a copolymer of acrylic and/or methacrylic acid, as well as acrylate and/or methacrylate.

3. Adhesive sheet according to claims 1 or 2, characterized in that the adhesive contains a copolymer of 2.5 to 5 mol, preferably 3 to 4 mol of at least one acrylate, whose alcohol group contains 2 to 18 C-atoms, per mol of (meth)-acrylic acid, 0 to 1.0 mol of a termonomer, which differs from the acrylate, as well as conventional polymerization additives.

4. Adhesive sheet according to claim 3, characterized in that the adhesive is a copolymer of 3 to 4 mol of n-butyl acrylate per mol of acrylic acid.

5. Adhesive sheet according to one of the preceding claims, characterized in that the sheet is opaque and in particular contains pigment.

6. Adhesive sheet according to one of the preceding claims, characterized in that the sheet is printed, particularly with at least one printing ink which is soluble in aqueous alkali.

7. Adhesive sheet according to claims 5 or 6, characterized in that the printing ink contains as a binder a copolymer of acrylic and/or methacrylic acid, as well as acrylate and/or methacrylate.

8. Adhesive sheet according to claims 6 or 7, characterized in that the printing ink contains a copolymer of ethyl acrylate and methacrylic acid, whose molar ratio is preferably approximately 4:1.

9. Adhesive sheet according to one of the preceding claims, characterized in that the sheet substantially comprises a copolymer of ethyl acrylate and methacrylic acid with a molar ratio of 2:1 to 4:1, particularly 2.5:1 to 3:1.

10. Adhesive sheet according to one of the preceding claims, characterized in that, after dissolving the adhesive sheet in aqueous alkaline solution, the copolymers can be recovered from the solution by an acid precipitation reaction.

## Revendications

1. Feuille ou film auto-adhésif composé au minimum de deux couches, comme étiquette et assimilés, où
a) une couche est composée d'un film d'un copolymérisat d'acide acrylique et/ou d'acide méthacrylique ainsi que d'acrylate et/ou de méthacrylate, soluble dans un alcali aqueux, et
b) la deuxième couche est composée d'un adhésif de contact soluble dans un alcali aqueux, et où la feuille auto-adhésive dans son ensemble est soluble dans l'alcali aqueux, et où le copolymérisat au moins peut être précipité et séparé de la solution par acidification.

2. Feuille adhésive selon la revendication 1, caractérisée en ce que l'adhésif est un copolymérisat d'acide acrylique et/ou d'acide méthacrylique ainsi que d'acrylate et/ou de méthacrylate.

3. Feuille adhésive selon la revendication 1 ou 2, caractérisée en ce que l'adhésif présente un copolymérisat de 2,5 à 5 moles, et de préférence 3 à 4 moles, d'au moins un acrylate dont le reste d'alcool comporte de 2 à 18 atomes de C, par mole d'acide (méth)acrylique, de 0 à 1,0 mole d'un termonomère différent d'un acrylate, ainsi que différents additifs de polymérisation.

4. Feuille adhésive selon la revendication 3, caractérisée en ce que l'adhésif présente un copolymérisat de 3 à 4 moles d'acrylate de n-butyle par mole d'acide acrylique.

5. Feuille adhésive selon l'une des revendications ci-dessus, caractérisée en ce que la feuille est opaque, et qu'elle contient en particulier des pigments.

6. Feuille adhésive selon l'une des revendications ci-dessus, caractérisée en ce que la feuille est imprimée, en particulier à l'aide d'au moins une encre d'impression soluble dans l'alcali aqueux.

7. Feuille adhésive selon la revendication 5 ou 6, caractérisée en ce que l'encre d'impression comporte comme liant un copolymérisat d'acide acrylique et/ou d'acide méthacrylique ainsi que d'acrylate et/ou de méthacrylate.

8. Feuille adhésive selon la revendication 6 ou 7, caractérisée en ce que l'encre d'impression contient un copolymérisat d'acrylate d'éthyle et d'acide méthacrylique, dont le rapport molaire est de préférence d'environ 4 : 1.

9. Feuille adhésive selon l'une des revendications précédentes, caractérisée en ce que la feuille est composée essentiellement d'un copolymérisat d'acrylate d'éthyle et d'acide méthacrylique dont le rapport molaire est de 2 : 1 à 4 : 1, et en particulier 2,5 : 1 jusqu'à 3 : 1.

10. Feuille adhésive selon l'une des revendications précédentes, caractérisée en ce que les copolymères peuvent être récupérés de la solution par une réaction de précipitation acide après dissolution de la feuille adhésive dans une solution aqueuse alcaline.
